# EUROPÄISCHE PATENTSCHRIFT

(11) **EP 1 303 430 B1**
(45) Veröffentlichungstag und Bekanntmachung des Hinweises auf die Patenterteilung: **30.03.2005**
(21) Anmeldenummer: 01951416.5
(22) Anmeldetag: 21.06.2001
(51) Int. Cl.: B60S 1/34, B60S 1/58

(54) **WISCHANLAGE**
WIPER SYSTEM
DISPOSITIF D'ESSUIE-GLACE

(30) Priorität: 13.07.2000 DE 10034041
(43) Veröffentlichungstag der Anmeldung: 23.04.2003
(73) Patentinhaber: ROBERT BOSCH GMBH, 70442 Stuttgart (DE)
(72) Erfinder: KNAUF, Richard, F-67480 Roppenheim (FR)
(86) Internationale Anmeldenummer: PCT/DE2001/002293
(87) Internationale Veröffentlichungsnummer: WO 2002/006097

(56) Entgegenhaltungen:
- WO-A-99/19188
- DE-A- 3 313 057
- GB-A- 1 448 892
- PATENT ABSTRACTS OF JAPAN vol. 2000, no. 12, 3. Januar 2001 (2001-01-03) & JP 2000 238622 A (ASMO CO LTD), 5. September 2000 (2000-09-05)
- PATENT ABSTRACTS OF JAPAN vol. 2000, no. 01, 31. Januar 2000 (2000-01-31) & JP 11 291873 A (MITSUBA CORP), 26. Oktober 1999 (1999-10-26)
- PATENT ABSTRACTS OF JAPAN vol. 2000, no. 12, 3. Januar 2001 (2001-01-03) & JP 2000 238618 A (ASMO CO LTD), 5. September 2000 (2000-09-05)

## Beschreibung

Die Erfindung betrifft eine Wischanlage zum Wischen einer, insbesondere an einem Kraftfahrzeug, bewegbaren Scheibe gemäß dem Oberbegriff des Anspruchs 1.

Eine derartige Wischanlage ist aus der GB 1 448 892 A bekannt. Diese umfasst ein erstes einer stationären Motor-Getriebe-Einheit zugeordnetes Kupplungs-Teil und ein zweites mit einer Wischer-Welle verbundenes Kupplungs-Teil. Eine Drehmomentübertragung zwischen den beiden Kupplungs-Teilen erfolgt über Zähne. Nachteilig bei dieser bekannten Wischanlage ist, dass im Falle einer Blockierung des Wischerarms die Motor-Getriebe-Einheit hohen Belastungen ausgesetzt ist. Diese Belastungen können eine Beschädigung der Motor-Getriebe-Einheit hervorrufen.

Aus der WO 99/19188 A1 ist eine Heckscheiben-Wischanlage eines Kraftfahrzeuges bekannt. Auch diese umfasst ein erstes und ein zweites Kupplungs-Teil, die zur Drehmomentübertragung in Eingriff bringbar sind.

Aus der DE 33 13 057 A1 ist eine Wischanlage für Scheiben bekannt. Bei dieser ist der Wischarm einschließlich der zugehörigen Lagerung an einer verschwenkbaren Scheibe befestigt. Die Motor-Getriebe-Einheit ist stationär mit der Karosserie verbunden. Zur Zentrierung ist karosserieseitig ein Zentrierzapfen vorgesehen, der mit einem scheibenseitig angeordneten Mitnehmer mit Zentriervertiefung in Eingriff bringbar ist. Exzentrisch zu diesem ist karosserieseitig am Ende eines drehantreibbaren Arms ein entgegen einer Federkraft einschiebbarer Zapfen vorgesehen, der mit einer in dem Mitnehmer angeordneten Aufnahmebohrung zur Drehmomentübertragung in Eingriff bringbar ist. Die Anordnung ist insgesamt kompliziert aufgebaut und besteht aus einer großen Zahl von Einzelteilen.

Der Erfindung liegt die Aufgabe zugrunde, eine Wischanlage zum Wischen einer bewegbaren Scheibe zu schaffen, bei der die Drehmomentübertragung bei gleichzeitiger Überlastsicherung zur Begrenzung des übertragbaren Drehmoments möglichst einfach sichergestellt ist.

Die Aufgabe wird durch die im kennzeichnenden Teil des Anspruchs 1 aufgeführten Merkmale gelöst. Der Kern der Erfindung besteht darin, eine Überlastsicherung zur Begrenzung der übertragenen Drehmomente vorzusehen, welche einteilig mit dem ersten Kupplungs-Teil und/oder dem zweiten Kupplungs-Teil ausgebildet ist. Durch die einteilige Ausbildung des Rastarms mit dem zweiten Kupplungs-Teil, der in eine entsprechende Rastausnehmung greift, ist eine produktionstechnisch besonders einfache Art geschaffen, um die Überlastsicherung zu schaffen.

Der Vorteil der Ausgestaltung gemäß den Ansprüchen 2 und 3 besteht darin, daß durch den Eingriff des kegelstumpfförmigen zweiten Kupplungs-Teils in das entsprechende topfförmig ausgebildete erste Kupplungs-Teil eine Selbstzentrierung der beiden Wellen und gleichzeitig ein spielfreie Verbindung entsteht.

Durch die federnde Vorspannung der Wischer-Welle gemäß Anspruch 5 wird sichergestellt, daß in axialer Richtung kein Spiel entsteht.

Die Arretier-Einrichtung gemäß Anspruch 6 hat den Vorteil, daß die Position des Wischarms bei geöffneter Scheibe fixiert wird, so daß nach erneutem Schließen der Scheibe der gewünschte Wischbereich wieder automatisch eingestellt ist.

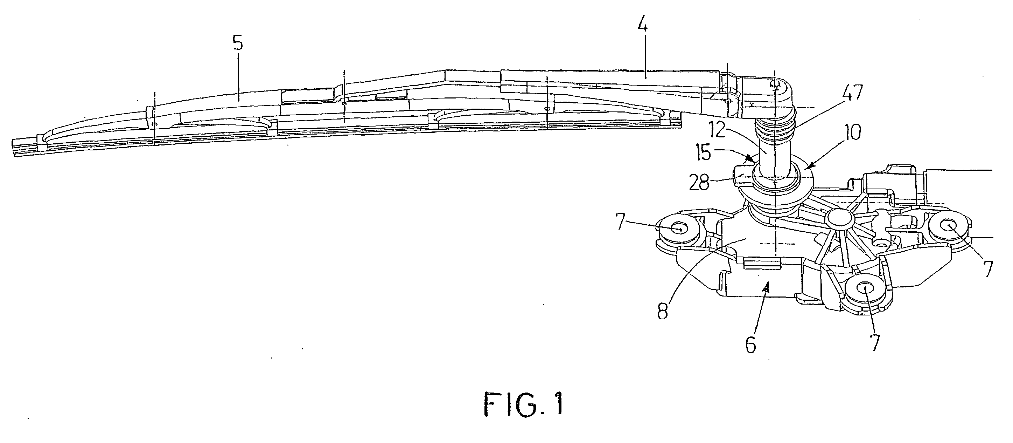

Zusätzliche Vorteile und Einzelheiten der Erfindung ergeben sich aus der Beschreibung eines Ausführungsbeispiels anhand der Zeichnung. Es zeigt
- Fig. 1: eine schematische Ansicht einer erfindungsgemäßen Wischanlage ohne Scheibe,
- Fig. 2: eine Seitenansicht der Wischanlage mit Scheibe in Schließstellung,
- Fig. 3: eine Querschnittsdarstellung der Wischanlage mit Scheibe in Schließstellung,
- Fig. 4: eine Ansicht gemäß Figur 2 mit der Scheibe in Öffnungsstellung,
- Fig. 5: eine Teil-Querschnittsdarstellung der Wischanlage gemäß Figur 3 mit Scheibe in Öffnungsstellung, und

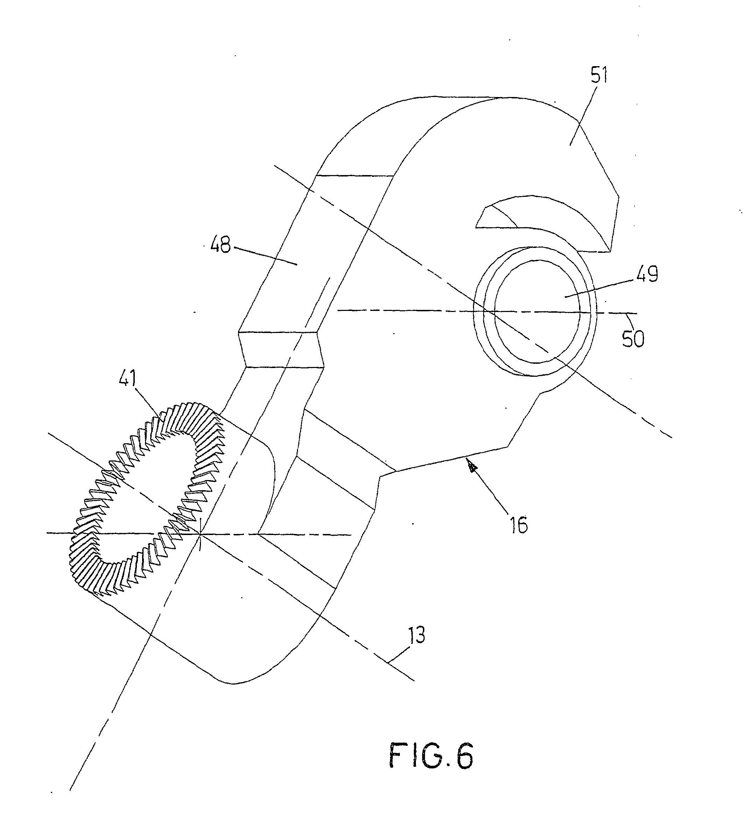

- Fig. 6: eine Draufsicht eines Anschluß-Stücks.

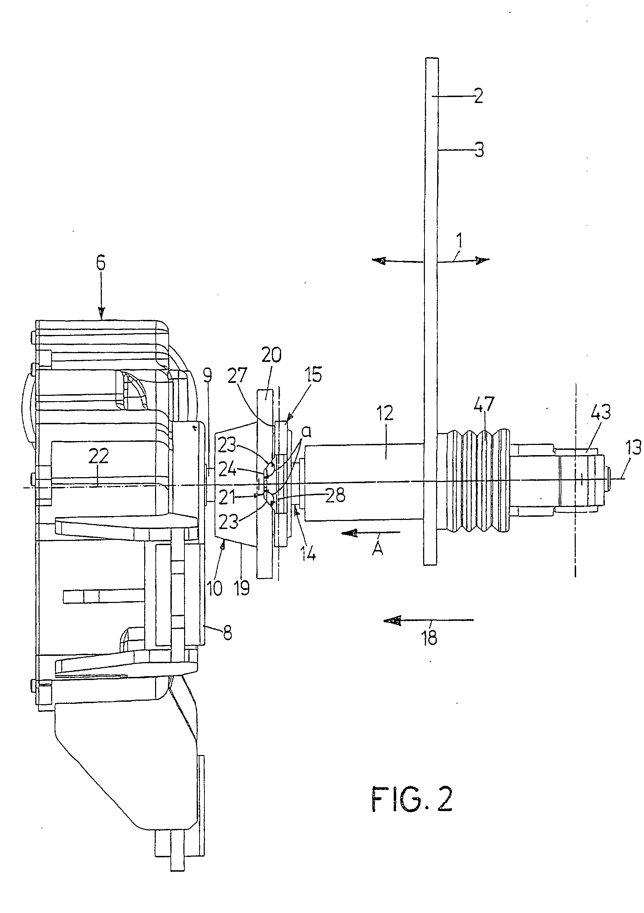

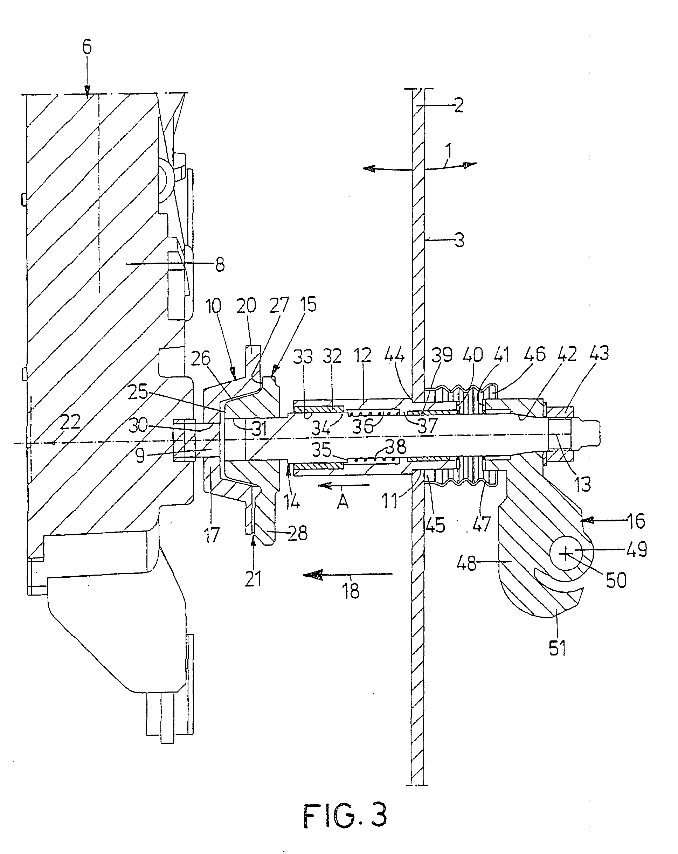

Ein Kraftfahrzeug weist im Heckbereich eine entlang einer Schwenk-Richtung 1 verschwenkbare Scheibe 2 mit einer Wischanlage auf. An der Außenseite 3 der Scheibe 2 ist ein über einen Wischarm 4 angelenkter Wischer 5 zum Wischen der Scheibe 2 vorgesehen. Zum Antrieb des Wischers 5 ist eine herkömmliche Motor-Getriebe-Einheit 6 vorgesehen, die im Randbereich mehrere Bohrungen 7 zur Verschraubung der Motor-Getriebe Einheit 6 mit der Karosserie des Kraftfahrzeugs aufweist. Gegenüber dem Gehäuse 8 der Motor-Getriebe-Einheit 6 steht ein Teil einer drehantreibbaren Antriebs-Welle 9 hervor, an dessen nach außen weisendem Ende ein Kupplungs-Teil 10 befestigt ist. Die Scheibe 2 weist eine kreisförmige Ausnehmung 11 auf, die in der in den Figuren 2 und 3 dargestellten Schließstellung dem Kupplungs-Teil 10 gegenüberliegt. Die Ausnehmung 11 nimmt eine im wesentlichen ringzylindrische Lager-Hülse 12 auf, die mit der Scheibe 2 verbunden ist. In der Lager-Hülse 12 ist eine um eine Achse 13 verschwenkbare Wischer-Welle 14 gelagert, die auch entlang der Achse 13 verschiebbar geführt ist. An dem dem Kupplungs-Teil 10 zugewandten Ende der Wischer-Welle 14 ist ein Kupplungs-Teil 15 befestigt, das in drehmomentübertragender Weise sowie die Wischer-Welle 14 in bezug auf die Antriebs-Welle 9 zentrierend mit dem Kupplungs-Teil 10 in Eingriff bringbar ist. Am entgegengesetzten Ende der Wischer-Welle 14 ist ein Anschluß-Stück 16 mit der Wischer-Welle 14 verbunden vorgesehen, an dem der Wischarm 4 befestigt wird.

Das Kupplungs-Teil 10 ist im wesentlichen topfförmig mit einem Boden 17 ausgebildet. An den Boden 17 schließt sich eine ringförmige, sich entgegen einer Einschub-Richtung 18 konisch erweiternde Seitenwand 19 an, an deren entgegen der Einschub-Richtung 18 gelegenem Ende ein radial vorstehender Anschlagring 20 vorgesehen ist. Der Boden 17, die Seitenwand 19 sowie der Anschlagring 20 sind einteilig miteinander ausgebildet. Auf der der Scheibe 2 zugewandten Seite des Anschlagringes 20 ist eine radial nach außen verlaufende, nutförmige Rastausnehmung 21 vorgesehen. Die Rastausnehmung weist in radialer Richtung - in bezug auf die Achse 22, um die die Antriebs-Welle 9 drehbar ist - einen trapezförmigen Querschnitt auf Die Flanken 23 des Trapezes schließen mit dem Grund 24 des Trapezes einen Winkel a ein. Die Breite des Grundes 24 nimmt mit zunehmendem Abstand von der Achse 22 ab, d. h. die Rastausnehmung 21 verjüngt sich in radialer Richtung.

Das Kupplungs-Teil 15 weist im wesentlichen eine kegelstumpfförmige Form mit einem Boden 25, einem sich daran anschließenden Mantel 26 und einer sich daran anschließenden radial vorspringenden, ringförmigen Anschlag-Kante 27 auf. Der Durchmesser des kegelstumpfförmigen Kupplungs-Teils 15 verjüngt sich in Einschub-Richtung 18. Das Kupplungs-Teil 15 weist ferner einen radial vorspringenden Rastarm 28 auf, der am entgegen der Einschub-Richtung 18 gelegenen Ende des Kupplungs-Teils 15 vorgesehen ist. Der Boden 25, der Mantel 26 sowie die Anschlag-Kante 27 und der Rastarm 28 sind einteilig miteinander ausgebildet. Der Rastarm 28 weist einen trapezförmigen in Richtung auf das Kupplungs-Teil 10 vorspringenden Rastvorsprung 29 auf. Der Rastvorsprung 29 ist derart ausgebildet, daß er mit der Rastausnehmung 21 in Eingriff bringbar ist, so daß in tangentialer Richtung bezogen auf die Achsen 13 und 22 eine formschlüssige Verbindung zwischen dem Kupplungs-Teil 10 und dem Kupplungs-Teil 15 möglich ist. Der Durchmesser und die Neigung des Mantels 26 ist so gewählt, daß das Kupplungs-Teil 15 formschlüssig in dem Kupplungs-Teil 10 aufnehmbar ist, wobei weder in radialer noch in axialer Richtung ein Schlupf besteht. Im zusammengefügten, in den Figuren 2 und 3 dargestellten Zustand kommt die Anschlag-Kante 27 in Anschlag mit dem Anschlagring 20. Die Kupplungs-Teile 10 und 15 weisen mittig Bohrungen 30 bzw. 31 auf, in denen die einander zugewandten Enden der Antriebs-Welle 9 bzw. Wischer-Welle 14 befestigt sind. Die Rastausnehmung 21 sowie der mit ihr zusammenwirkende Rastarm 28 bilden zusammen eine Überlastsicherung zur Begrenzung des zwischen dem Kupplungs-Teil 10 und dem Kupplungs-Teil 15 übertragbaren Drehmoments. Oberhalb eines vorgegebenen zu übertragenden Drehmoments rutscht der Rastvorsprung 29 über die Flanken 23 auf den Anschlag-Ring 20, wobei in diesem Zustand keine Drehmomentübertragung mehr möglich ist. Das maximal übertragbare Drehmoment wird bestimmt durch die in Einschub-Richtung 18 wirkende Andrück-Kraft A und den Winkel a in Verbindung mit der durch die Materialien, aus denen die Kupplungs-Teile 10 und 15 bestehen, bedingten Reibungskoeffizienten.

Im folgenden wird die Lagerung der Wischer-Welle 14 in der Lager-Hülse 12 genauer beschrieben. Am in Einschub-Richtung 18 liegenden Ende der Lager-Hülse 12 ist eine als Lager ausgebildete, ringzylindrische Sinterbuchse 32 vorgesehen, die an der Hülse 12 befestigt ist. An der Innenfläche 33 der Sinterbuchse 32 liegt ein zylinderförmiger, in radialer Richtung gegenüber der Welle 14 vorspringender Gleitsteg 34 an, der mit der Welle 14 einteilig ausgebildet ist. Der Gleitsteg 34 wird entgegen der Einschub-Richtung 18 durch eine Anschlag-Kante 35 begrenzt. Zwischen der Welle 14 und der Hülse 12 ist entgegen der Einschub-Richtung 18 der Anschlag-Kante 35 nachgeordnet ein Ringraum 36 vorgesehen, der am anderen Ende durch einen von der Hülse 12 nach innen vorspringenden ringförmigen Steg 37 begrenzt wird. In dem Ringraum 36 ist zwischen dem Steg 37 und der Anschlag-Kante 35 eine Spiralfeder 38 angeordnet, so daß die Welle 14 entgegen der Einschub-Richtung 18 gefedert in die Hülse 12 einschiebbar ist. Dem Steg 37 ist entgegen der Einschub-Richtung 18 eine weitere, als Lager ausgebildete Sinterbuchse 39 nachgeordnet, an deren Innenseite die Welle 14 gleitend gelagert ist. Die Sinterbuchse 39 ist mit der Hülse 12 fest verbunden. Am entgegen der Einschub-Richtung 18 gelegenen, stirnseitigen Ende der Hülse 12 ist ein Zahnkranz 40 vorgesehen. Das mit der Welle 14 drehfest verbundene Anschluß-Stück 16 weist auf der dem Zahnkranz 40 gegenüberliegenden Seite einen korrespondierenden Zahnkranz 41 auf, dessen Zähne so gewählt sind, daß sie mit den Zähnen des Zahnkranzes 40 in Eingriff bringbar sind. Befinden sich die Zahnkränze 40 und 41 im Eingriff miteinander, so entsteht in tangentialer Richtung eine formschlüssige Verbindung zwischen der Hülse 12 und dem Anschluß-Stück 16, so daß der Wischarm nicht verschwenkt werden kann. Die Zahnkränze 40 und 41 bilden gemeinsam eine Arretier-Einrichtung. Das Anschluß-Stück 16 weist eine sich entgegen der Einschub-Richtung 18 verjüngende Bohrung 42 auf, in der ein sich entsprechend verjüngender Abschnitt der Welle 14 aufgenommen ist. Durch die konische Verjüngung wird das Anschluß-Stück 16 in Einschub-Richtung 18 festgelegt. Am entgegengesetzten Ende ist das Anschluß-Stück 16 durch eine auf der Welle 14 vorgesehene Mutter 43 befestigt. Die Hülse 12 ist mit der Scheibe 2 auf der einen Seite durch eine von der Hülse 12 in radialer Richtung vorspringende Anlage-Kante 44 und auf der anderen Seite durch eine mit der Hülse 12 verbundene RingScheibe 45 verbunden. Benachbart zu dem Zahnkranz 41 ist eine RingScheibe 46 vorgesehen, die mit dem Anschluß-Stück 16 verbunden ist. Zwischen den Scheiben 45 und 46 ist ein die Welle 14 umgebender Balg 47 vorgesehen, der mit den beiden Scheiben 45 und 46 verbunden ist und den Zwischenraum zwischen den beiden Zahnkränzen 40 und 41 vor dem Eindringen von Schmutz schützt. Das Anschluß-Stück 16 weist im wesentlichen die Form eines sich von der Achse 13 in radialer Richtung erstreckenden Hebels mit einem Arm 48 auf, in dem ein Lager 49 mit einer Achse 50 vorgesehen ist. Die Achsen 13 und 50 verlaufen im wesentlichen senkrecht zueinander. Dem Lager 49 ist in radialer Richtung in bezug auf die Achse 13 eine mit dem Wischarm 4 zusammenwirkende Nase 51 nachgeordnet, die entgegen der Einschub-Richtung 18 weist.

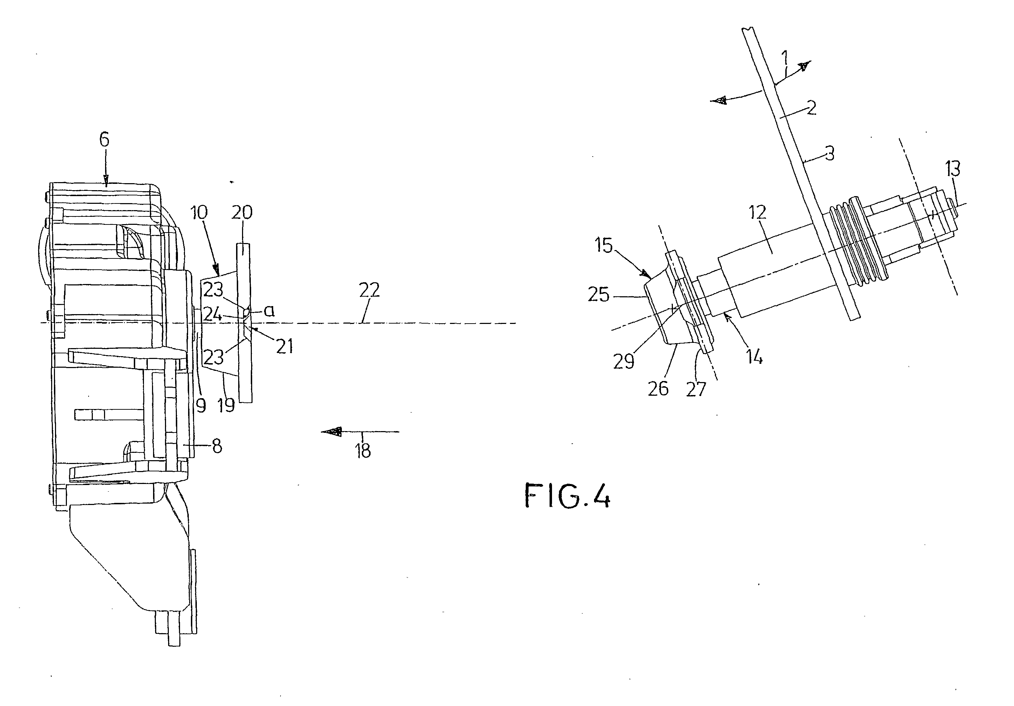

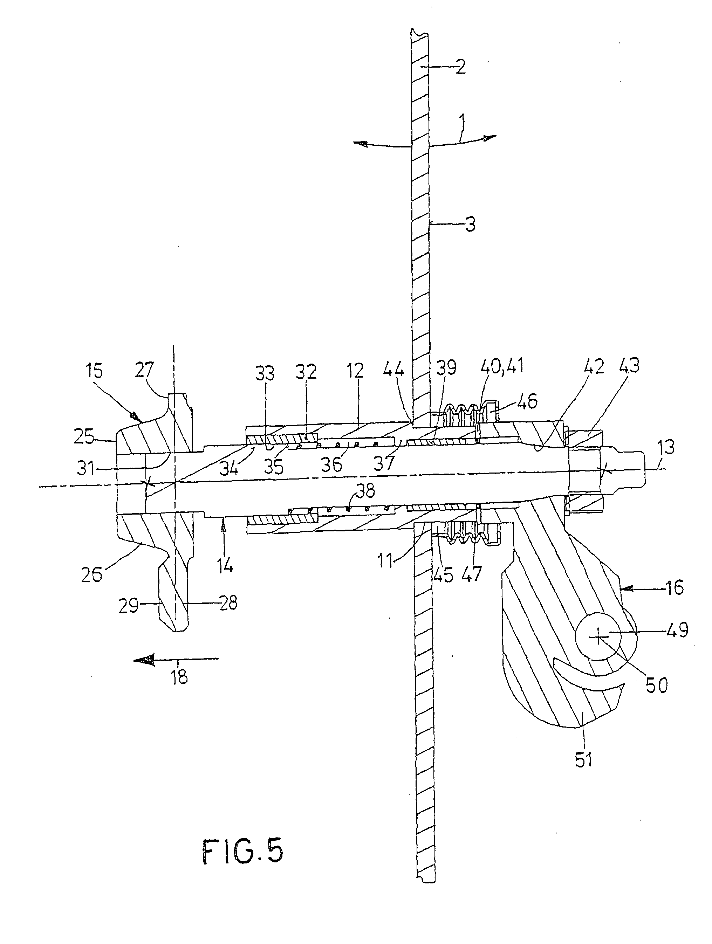

Im folgenden wird die Funktion der Wischanlage bei geschlossener Scheibe 2 beschrieben. Durch die Motor-Getriebe-Einheit 6 wird das Kupplungs-Teil 10 in Drehungen um die Achse 22 versetzt. Durch den Eingriff zwischen der Rastausnehmung 21 und dem Rastarm 28 wird das Drehmoment auf das Kupplungs-Teil 15 und somit über das Anschluß-Stück 16 auf den Wischer 5 übertragen. Wird die Scheibe 2 geöffnet, so gelangen Hülse 12 und Welle 14 in die in den Figuren 4 und 5 dargestellte Offnungsstellung. Zunächst wird beim Ausschwenken der Scheibe 2 das Kupplungs-Teil 15 außer Eingriff mit dem Kupplungs-Teil 10 gebracht. Dies gilt gleichermaßen für den Rastvorsprung 29. Aufgrund der nun fehlenden, in Figur 3 durch das Kupplungs-Teil 10 gebildeten Gegenkraft verschiebt die Feder 38 die Welle 14 in die in Figur 5 dargestellte Position. Hierdurch nähern sich die Zahnkränze 40 und 41 einander an und kommen miteinander in Eingriff. Auf diese Weise wird sichergestellt, daß der Wischarm 4 gegenüber der Scheibe 2 verschwenkfest arretiert ist. Beim erneuten Zuschwenken, d. h. Schließen, der Scheibe 2 wird das Kupplungs-Teil ,15 in das Kupplungs-Teil 10 eingeführt. Sobald die Scheibe geschlossen ist, ist die Arretierung aufgehoben, da die Welle mit dem Wischarm durch das Kupplungsstück nach außen verschoben wird. Bevor Rastausnehmung und Rastvorsprung einrasten, wird der Wischarm durch die Reibung des Wischgummis auf der Scheibe gehalten. Durch die konischen aufeinander abgestimmten Flächen, d. h. die Seitenwand 19 und den Mantel 26, tritt eine automatische Zentrierung der Welle 14 in bezug auf die Welle 9 ein. Für den Fall, daß die Rastausnehmung 21 und der Rastarm 28 einander gegenüberliegen, kommen beide miteinander in Eingriff. Für den Fall, daß dies nicht der Fall ist, liegt zunächst der Rastarm 28 auf dem Anschlagring 20. Bei einem anschließenden Inbetriebsetzen läuft das Kupplungs-Teil 10 maximal eine Umdrehung, bis die Rastausnehmung 21 und der Rastvorsprung 29 miteinander in Eingriff kommen, so daß der Wischvorgang dann beginnen kann. Wenn das Kupplungs-Teil 10 und das Kupplungs-Teil 15 miteinander in Eingriff kommen, ist die Arretierung zwischen Zahnkranz 40 und 41 aufgehoben. Da lediglich eine Rastausnehmung 21 entlang des Umfangs vorgesehen ist, ist die relative Positionierung des Wischarms 4 in bezug auf die Motor-Getriebe-Einheit 6 immer eindeutig definiert, so daß der richtige Wischbereich überstrichen wird. Für den Fall einer Blockierung des Wischarmes 4 führt die bereits beschriebene Überlastsicherung dazu, daß der Rastvorsprung 29 aus der Rastausnehmung 21 herausgleitet und somit keine Drehmomentübertragung mehr erfolgt.

## Patentansprüche

1. Wischanlage zum Wischen einer, insbesondere an einem Kraftfahrzeug, bewegbaren Scheibe (2) mit
a) einem drehantreibbaren ersten Kupplungs-Teil (10) zur Verbindung mit einer einer stationären Motor-Getriebe-Einheit (6) nachgeordneten, drehantreibbaren Antriebs-Welle (9),
b) einem zweiten Kupplungs-Teil (15), welches
i) mit einer Wischer-Welle (14) zum Antrieb eines Wischers (5) verbunden ist,
ii) gemeinsam mit der Scheibe (2) bewegbar ist und
iii) mit dem ersten Kupplungs-Teil (10) in drehmomentübertragender Weise sowie die Wischer-Welle (14) in bezug auf die Antriebs-Welle (9) zentrierend in Eingriff bringbar ist,
**gekennzeichnet durch**
c) eine Überlastsicherung zur Begrenzung des zwischen dem ersten Kupplungs-Teil (10) und dem zweiten Kupplungs-Teil (15) übertragbaren Drehmoments,
i) welche einteilig mit dem ersten Kupplungs-Teil (10) und/oder zweiten Kupplungs-Teil (15) ausgebildet ist und
ii) einen mit dem zweiten Kupplungs-Teil (15) oder dem ersten Kupplungs-Teil (10) einteilig damit ausgebildeten Rastarm (28) aufweist,
iii) wobei das erste Kupplungs-Teil (10) bzw. das zweite Kupplungs-Teil (15) eine Rastausnehmung (21) zum Eingriff mit dem Rastarm (28) aufweist, wobei die Rastausnehmung (21) in radialer Richtung einen trapezförmigen Querschnitt aufweist.

2. Wischanlage gemäß Anspruch 1, **dadurch gekennzeichnet, daß** das erste Kupplungs-Teil (10) oder das zweite Kupplungs-Teil (15) topfförmig ausgebildet ist.

3. Wischanlage gemäß Anspruch 2, **dadurch gekennzeichnet, daß** das zweite Kupplungs-Teil (15) bzw. das erste Kupplungs-Teil (10) kegelstumpfförmig ausgebildet ist.

4. Wischanlage gemäß einem der vorangehenden Ansprüche, **dadurch gekennzeichnet, daß** das zweite Kupplungs-Teil (15) entlang der Wischer-Welle (14) gegenüber der Scheibe (2) gefedert verschiebbar ist.

5. Wischanlage gemäß Anspruch 4, **dadurch gekennzeichnet, daß** das im Eingriff mit dem ersten Kupplungs-Teil (10) befindliche zweite Kupplungs-Teil (15) entlang der Wischer-Welle (14) gegenüber dem ersten Kupplungs-Teil (10) vorgespannt ist.

6. Wischanlage gemäß einem der vorangehenden Ansprüche, **dadurch gekennzeichnet, daß** eine Arretier-Einrichtung zur Arretierung der Wischer-Welle (14) gegen Verschwenkungen, wenn das erste Kupplungs-Teil (10) mit dem zweiten Kupplungs-Teil (15) außer Eingriff ist, vorgesehen ist.

7. Wischanlage gemäß Anspruch 6, **dadurch gekennzeichnet, daß** die Arretier-Einrichtung zwei miteinander in Eingriff bringbare Zahnkränze (40, 41) aufweist.

## Claims

1. Wiping system for wiping a movable pane (2), in particular on a motor vehicle, having
a) a first coupling part (10) which can be driven in rotation for connection to a drive shaft (9) which is arranged behind a stationary motor/gear mechanism unit (6) and can be driven in rotation,
b) a second coupling part (15) which
i) is connected to a wiper shaft (14) for driving a wiper (5),
ii) can be moved together with the pane (2), and
iii) can be brought into engagement with the first coupling part (10) in a torque-transmitting manner and so as to centre the wiper shaft (14) with regard to the drive shaft (9),
**characterized by**
c) an overload safeguard for limiting the torque which can be transmitted between the first coupling part (10) and the second coupling part (15),
i) which overload safeguard is designed in one piece with the first coupling part (10) and/or the second coupling part (15) and
ii) has a latching arm (28) which is thus designed in one piece with the second coupling part (15) or the first coupling part (10),
iii) the first coupling part (10) or the second coupling part (15) having a latching recess (21) for engagement with the latching arm (28), the latching recess (21) having a trapezoidal cross section in the radial direction.

2. Wiping system according to Claim 1, **characterized in that** the first coupling part (10) or the second coupling part (15) is of cup-shaped design.

3. Wiping system according to Claim 2, **characterized in that** the second coupling part (15) or the first coupling part (10) is of frustoconical design.

4. Wiping system according to one of the preceding claims, **characterized in that** the second coupling part (15) can be displaced in a sprung manner along the wiper shaft (14) with respect to the pane (2).

5. Wiping system according to Claim 4, **characterized in that** the second coupling part (15) which is in engagement with the first coupling part (10) is prestressed along the wiper shaft (14) with respect to the first coupling part (10).

6. Wiping system according to one of the preceding claims, **characterized in that** a locking device is provided for locking the wiper shaft (14) against pivoting movements when the first coupling part (10) is not in engagement with the second coupling part (15).

7. Wiping system according to Claim 6, **characterized in that** the locking device has two crown gears (40, 41) which can be brought into engagement with one another.

## Revendications

1. Installation d'essuie-glace pour essuyer une vitre (2) mobile, en particulier sur un véhicule automobile, comportant
a) une première pièce de couplage (10) susceptible de tourner pour assurer la liaison avec un arbre d'entraînement (9) susceptible de tourner et disposé en aval d'une unité d'entraînement à moteur (6) fixe,
b) une deuxième pièce de couplage (15) qui
i) est reliée à un arbre d'essuie-glace (14) pour entraîner un essuie-glace (5),
ii) peut être déplacée conjointement à la vitre (2) et
iii) peut être amenée en prise avec la première pièce de couplage (10) d'une façon qui transmette un couple de rotation et qui centre l'arbre d'essuie-glace (14) par rapport à l'arbre d'entraînement (9),
**caractérisée par**
c) une protection contre les surcharges destinée à limiter le couple de rotation susceptible d'être transmis entre la première pièce de couplage (10) et la deuxième pièce de couplage (15),
i) la protection contre les surcharges formant une seule pièce avec la première pièce de couplage (10) et/ou la deuxième pièce de couplage (15) et
ii) présentant un bras d'accrochage (28) qui forme une seule pièce avec la première pièce de couplage (10) ou la deuxième pièce de couplage (15),
iii) la première pièce de couplage (10) ou la deuxième pièce de couplage (15) présentant un creux d'accrochage (21) pour assurer la prise avec le bras d'accrochage (28), et le creux d'accrochage (21) présentant en direction radiale une section transversale trapézoïdale.

2. Installation d'essuie-glace selon la revendication 1,
**caractérisée en ce que**
la première pièce de couplage (10) ou la deuxième pièce de couplage (15) a une forme de creuset.

3. Installation d'essuie-glace selon la revendication 2,
**caractérisée en ce que**
la première pièce de couplage (10) ou la deuxième pièce de couplage (15) a une forme tronconique.

4. Installation d'essuie-glace selon l'une des revendications précédentes,
**caractérisée en ce que**
la deuxième pièce de couplage (15) peut se déplacer par ressort le long de l'arbre d'essuie-glace (14) par rapport à la vitre (2).

5. Installation d'essuie-glace selon la revendication 4,
**caractérisée en ce que**
la deuxième pièce de couplage (15) en prise avec la première pièce de couplage (10) est précontrainte le long de l'arbre d'essuie-glace (14) par rapport à la première pièce de couplage (10).

6. Installation d'essuie-glace selon l'une des revendications précédentes,
**caractérisée en ce qu'**
on prévoit une installation de blocage destinée à bloquer l'arbre d'essuie-glace (14) en cas de basculements lorsque la première pièce de couplage (10) n'est pas en prise avec la deuxième pièce de couplage (15).

7. Installation d'essuie-glace selon la revendication 6,
**caractérisée en ce que**
l'installation de blocage présente deux couronnes dentées (40, 41) qu'on peut amener en prise l'une avec l'autre.
